(19) Europäisches Patentamt
European Patent Office
Office européen des brevets

(11)  EP 3 114 006 B1

(12)  **FASCICULE DE BREVET EUROPEEN**

(45) Date de publication et mention
de la délivrance du brevet:
**20.12.2017 Bulletin 2017/51**

(21) Numéro de dépôt: **15713206.9**

(22) Date de dépôt: **27.02.2015**

(51) Int Cl.:
**B62D 5/04** *(2006.01)*

(86) Numéro de dépôt international:
**PCT/FR2015/050471**

(87) Numéro de publication internationale:
**WO 2015/132508 (11.09.2015 Gazette 2015/36)**

(54) **PROCÉDÉ DE FILTRAGE POUR LA DÉTECTION DES TRANSITIONS D'UN SIGNAL DE DIRECTION ASSISTÉE**

FILTRIERUNGSVERFAHREN ZUR DETEKTION VON ÜBERGÄNGEN IN EINEM SERVOLENKUNGSSIGNAL

FILTERING METHOD FOR DETECTING TRANSITIONS IN A POWER STEERING SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2014 FR 1451683**

(43) Date de publication de la demande:
**11.01.2017 Bulletin 2017/02**

(73) Titulaire: **JTEKT Europe**
**69540 Irigny (FR)**

(72) Inventeurs:
• **BOURDREZ, Sébastien**
**F-69510 Yzeron (FR)**

• **MOULAIRE, Pascal**
**F-69890 La Tour de Salvagny (FR)**
• **RAVIER, Christophe**
**F-69780 Saint Pierre de Chandieu (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A1- 1 645 454        EP-A1- 2 426 030**
**WO-A1-2012/035418**

## Description

La présente invention concerne le domaine général des procédés de gestion de directions assistées équipant des véhicules, et notamment des véhicules automobiles.

Elle concerne plus particulièrement le traitement des signaux, tels que le signal de mesure du couple délivré par le moteur d'assistance de direction, qui sont représentatifs de paramètres de fonctionnement de la direction assistée, et dont la connaissance et l'analyse sont nécessaires à la bonne gestion de ladite direction assistée.

Les signaux qui sont utilisés pour la gestion des directions assistées, et en particulier les signaux de mesure recueillis auprès des capteurs, tels que par exemple les capteurs mesurant le couple moteur ou le couple exercé par le conducteur sur le volant de conduite, sont susceptibles d'être affectés par du bruit.

Le bruit dégrade la qualité du signal en superposant à l'information utile, portée par le signal, des fluctuations aléatoires, qui peuvent être rapides et d'amplitude non négligeable.

Or, la gestion de la direction assistée, et notamment le choix des lois d'assistance applicables à un instant considéré, nécessite de connaître précisément le comportement de la direction et/ou le comportement du véhicule (par exemple le sens de déplacement du véhicule, le sens de braquage du volant de conduite, etc.) audit instant considéré.

Bien souvent, cette connaissance repose sur la perception d'un état, ou d'un changement d'état (transition), d'un signal censé être représentatif du fonctionnement de la direction assistée ou du comportement du véhicule.

Cette perception peut notamment résulter du franchissement, par l'une des caractéristiques du signal considéré (amplitude, fréquence, etc.), d'une valeur seuil prédéterminée.

On comprendra donc que les variations aléatoires du signal, induites par le bruit, peuvent parfois fausser cette perception, par exemple en provoquant accidentellement un dépassement de seuil à l'origine d'un « faux positif ».

Un exemple d'un procédé pour la gestion de la direction assisté selon l'art antérieure est divulgué dans la demande de Brevet Européenne EP1645454 A1, sur la quelle les préambules des revendications 1 et 6 son basés. Les objets assignés à l'invention visent par conséquent à remédier aux inconvénients susmentionnés et à proposer une nouvelle solution permettant de traiter de manière fiable et rapide des signaux bruités utiles à la gestion d'une direction assistée, afin d'améliorer la détection de certaines situations de vie du véhicule et de la direction.

Les objets assignés à l'invention sont atteints au moyen d'un procédé de gestion de direction assistée caractérisé en ce qu'il comprend une étape (a) de détection de transition dans un signal bruité, au cours de laquelle on soumet un signal bruité, porteur d'une information utilisée pour la gestion de la direction assistée, à une sous-étape (a1) de dérivation, au cours de laquelle on évalue la dérivée temporelle du signal bruité, puis à une sous-étape (a2) de filtrage sélectif au cours de laquelle on compare ladite dérivée temporelle du signal bruité à un seuil de variation prédéterminé afin de détecter l'apparition d'un pic de dérivée, supérieur audit seuil de variation, on évalue la durée de maintien dudit pic de dérivée, pendant laquelle la dérivée temporelle du signal bruité se maintient au-dessus dudit seuil de variation, et l'on vérifie si ladite durée de maintien de pic atteint ou dépasse un seuil de durée minimale prédéterminé.

Les objets assignés à l'invention sont également atteints au moyen d'un filtre pour la détection de transitions au sein d'un signal bruité, ledit filtre comprenant un module de dérivation qui est structuré pour recueillir le signal bruité et en évaluer la dérivée temporelle, ainsi qu'un module de filtrage sélectif qui est structuré d'une part pour comparer ladite dérivée temporelle du signal bruité à un seuil de variation prédéterminé afin de détecter l'apparition d'un pic de dérivée, supérieur audit seuil de variation, et d'autre part pour évaluer la durée de maintien dudit pic, pendant laquelle la dérivée temporelle du signal bruité se maintient au-dessus dudit seuil de variation, après avoir franchi ledit seuil de variation, et pour vérifier si ladite durée de maintien de pic atteint ou dépasse un seuil de durée minimale prédéterminé.

Avantageusement, l'invention permet de distinguer les transitions véritablement représentatives d'une évolution du signal et d'exclure les faux positifs provoqués par le bruit grâce à l'application d'une double condition, à savoir une première condition selon laquelle la valeur de la dérivée temporelle du signal doit franchir un seuil de variation (seuil de pente), ce qui indique l'apparition d'un phénomène de transition, et une seconde condition selon laquelle ce phénomène de transition, caractérisé par le maintien de la valeur de la dérivée au-dessus du seuil de transition, doit durer suffisamment pour être imputable à un changement effectif de la valeur du signal (et donc de l'état de la direction), et non à une simple fluctuation locale provoquée par le bruit.

Ainsi, le filtre selon l'invention permettra d'identifier les pics de dérivée du signal, et d'opérer aisément et rapidement une distinction entre d'une part les pics qui sont représentatifs de l'état de la direction ou du comportement du véhicule, et qui pourront donc être retenus pour la gestion de ladite direction, et d'autre part les pics provoqués par le bruit, qui ne seront pas pris en considération afin de ne pas fausser la gestion de la direction.

Avantageusement, on remarquera que le traitement proposé par l'invention peut s'appliquer directement au signal bruité brut, tel qu'il est obtenu, le cas échéant, au niveau d'un capteur, sans qu'il soit nécessaire de filtrer préalablement ledit signal pour en éliminer le bruit de fond.

L'invention permet donc un traitement du signal à la fois rapide et peu sensible aux instabilités, qui améliore la réactivité et la fiabilité du procédé de gestion, et par conséquent la sécurité du système de direction.

L'exploitation directe des signaux bruités permet en outre de faire l'économie de filtres intermédiaires, ce qui simplifie la mise en oeuvre du procédé et réduit le coût de cette mise en oeuvre.

D'autres objets, caractéristiques et avantages de l'invention apparaîtront plus en détail à la lecture de la description qui suit, ainsi qu'à l'aide des dessins annexés, fournis à titre purement illustratif et non limitatifs, parmi lesquels :

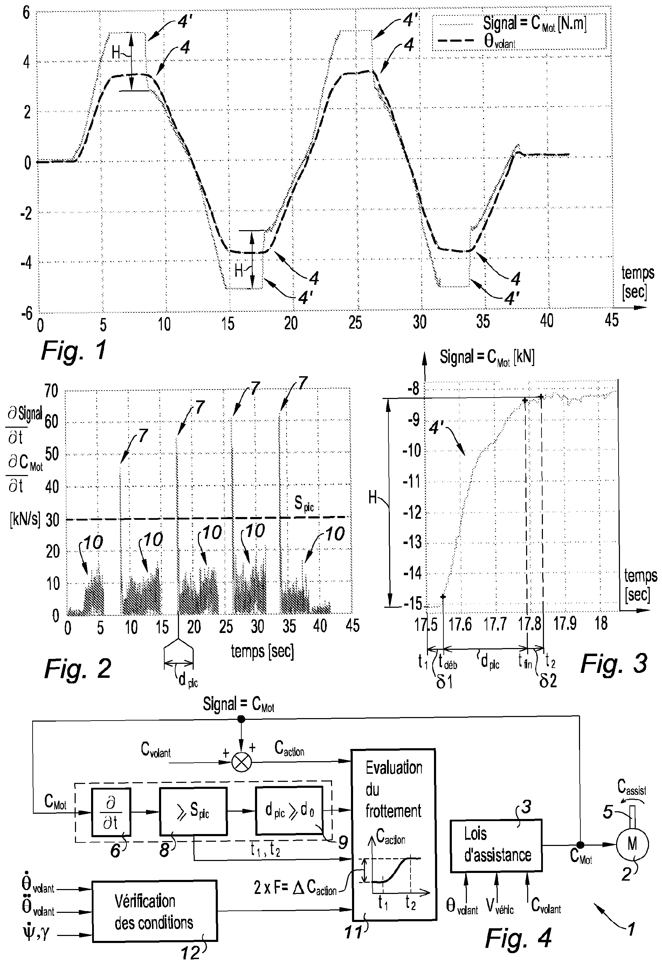

La figure 1 illustre, sur un diagramme temporel, l'évolution d'un signal bruité, en l'espèce un signal représentatif du couple moteur qui est fourni par le moteur d'assistance, signal dont l'invention permet de détecter les transitions, en l'espèce les transitions dues à des inversions de braquage successives illustrées, sur ce même graphique, par une courbe d'évolution de la position angulaire du volant de conduite (ou, de manière équivalente, en tenant compte du rapport de réduction du mécanisme d'entraînement, par une courbe d'évolution de la position angulaire de l'arbre du moteur d'assistance).

La figure 2 illustre, sur un diagramme temporel, les valeurs prises par la dérivée temporelle du signal bruité de la figure 1.

La figure 3 illustre, selon un diagramme temporel, un agrandissement de la courbe représentant le signal bruité de la figure 1, au moment d'une chute de couple (en valeur absolue) provoquée par une inversion de braquage.

La figure 4 illustre, selon un schéma-bloc, le fonctionnement d'un procédé conforme à l'invention.

L'invention concerne un procédé de gestion d'une direction assistée 1.

Ladite direction assistée 1 comprend au moins un moteur d'assistance 2 destiné à délivrer un effort d'assistance $C_{assist}$.

On peut indifféremment envisager tout type de moteur d'assistance 2, et plus particulièrement tout type de moteur d'assistance à double sens de fonctionnement.

En particulier, l'invention peut tout aussi bien s'appliquer à un moteur d'assistance 2 rotatif, destiné à exercer un effort d'assistance $C_{assist}$ de type couple, qu'à un moteur d'assistance 2 linéaire, destiné à exercer un effort d'assistance $C_{assist}$ de type traction ou compression.

Par ailleurs, ledit moteur d'assistance 2 peut être par exemple hydraulique, ou bien, de préférence, électrique (l'utilisation d'un moteur électrique facilitant notamment l'implantation et la mise en oeuvre dudit moteur, ainsi que la génération et la gestion des signaux utiles).

De façon particulièrement préférentielle, le moteur d'assistance 2 sera un moteur électrique rotatif, par exemple de type « brushless ».

Par ailleurs, la direction assistée 1 comprend de préférence, de manière connue en soi (mais non représentée), un volant de conduite par lequel le conducteur du véhicule peut entraîner en rotation une colonne de direction qui engrène, au moyen d'un pignon, sur une crémaillère de direction montée coulissante dans un carter de direction solidaire du châssis du véhicule.

Les extrémités de la crémaillère de direction sont de préférence reliées chacune à un porte-fusée orientable en lacet, sur lequel est monté une roue directrice (et préférentiellement motrice) du véhicule, de telle manière que le déplacement de la crémaillère en translation dans le carter provoque une modification de l'angle de braquage (i.e. de l'orientation en lacet) desdites roues directrices.

Le moteur d'assistance 2 peut venir en prise sur la colonne de direction, par exemple par l'intermédiaire d'un réducteur à roue tangente et vis sans fin, ou bien encore venir en prise directement sur la crémaillère de direction, par un mécanisme d'entraînement de type vis à billes ou bien *via* un pignon moteur distinct du pignon de la colonne de direction (pour former alors un mécanisme de direction dit « à double pignon »).

Tel que cela est illustré sur la figure 4, la consigne d'effort (ou, plus préférentiellement, la consigne de couple) $C_{Mot}$ qui est appliquée au moteur d'assistance 2 afin que ledit moteur assiste le conducteur dans la manoeuvre de la direction 1 dépend de lois d'assistance prédéterminées, stockées dans une mémoire non volatile d'un calculateur (ici un module d'application de lois d'assistance 3), lesdites lois d'assistance pouvant ajuster ladite consigne d'effort $C_{Mot}$ en fonction de divers paramètres tels que le couple volant $C_{volant}$ exercé par le conducteur sur le volant de conduite, la vitesse (longitudinale) $V_{véhic}$ du véhicule, la position angulaire $\theta_{volant}$ du volant de conduite, etc.

Selon l'invention, le procédé comprend une étape (a) de détection de transition 4' dans un signal bruité (noté « *Signal* » sur les figures et dans ce qui suit).

Au cours de cette étape, on cherche à détecter une (ou des) transition(s) 4' dudit signal bruité *Signal* qui correspondent à des changements d'état de la direction, ou, plus globalement, à des changements d'état du comportement dynamique du véhicule.

Selon une application préférée du procédé, à laquelle il sera fait préférentiellement référence dans ce qui suit, par commodité de description, les transitions 4' à détecter correspondront à des inversions de braquage 4, c'est-à-dire à des changements du sens dans lequel le conducteur du véhicule actionne (volontairement) le volant de conduite, ces changements ayant pour but et pour effet de passer d'une situation de braquage vers la gauche, dans laquelle le conducteur exerce une force qui tire le volant vers la gauche, à une situation de braquage vers la droite, dans laquelle le conducteur exerce une force qui tire le volant vers la droite, ou inversement.

L'étape (a) de détection de transition(s) 4' constituera donc de préférence une étape de détection d'inversion(s) de braquage 4.

Bien entendu, l'invention n'est nullement limitée à cette application particulière, le procédé pouvant parfaitement s'appliquer à tout signal bruité exploité par la direction assistée, ou, plus globalement par le véhicule.

Ainsi, le signal bruité *Signal* pourra notamment correspondre à la vitesse de rotation ou au sens de rotation du volant de conduite, au couple volant $C_{volant}$, à la vitesse ou au sens de rotation de l'arbre 5 du moteur d'assistance 2, au couple délivré par ledit moteur d'assistance, à la vitesse du véhicule $V_{véhic}$, à la vitesse de lacet ou à l'accélération du véhicule, ou à toute combinaison utile de ces signaux.

Dans l'exemple où l'on applique le procédé à la détection des inversions de braquage 4, lesdites inversions de braquage 4 successives sont bien visibles sur la figure 1, sur laquelle la courbe en trait pointillé illustre l'évolution dans le temps de la position angulaire $\theta_{volant}$ du volant de conduite, faisant ainsi apparaître les alternances du sens de rotation dudit volant, lorsque le conducteur braque successivement le volant à droite, puis à gauche, puis de nouveau à droite, etc. (ce qui explique que la courbe représentative de la position angulaire du volant présente ici une forme proche d'une sinusoïde).

On notera que, dans l'exemple préférentiel de la figure 1, la position angulaire $\theta_{volant}$ du volant de conduite, représentative de la configuration de braquage de la direction, est en fait exprimée, de manière équivalente, à partir de la position angulaire de l'arbre 5 du moteur d'assistance 2.

En effet, toute mesure de position représentative de la configuration spatiale de braquage de la direction, et donc de la position angulaire du volant de conduite, peut convenir aux fins d'illustration et de caractérisation d'inversions de braquage.

En l'espèce, le rapport de réduction mécanique de la chaîne cinématique qui lie l'arbre 5 du moteur d'assistance au volant de conduite établit une relation entre les positions angulaires de l'arbre du moteur et du volant.

Dans l'exemple de la figure 1, le rapport de réduction étant de l'ordre de 26, et l'échelle d'angle portée en ordonnées correspondant à des kilo-degrés ($10^3$ degrés) mécaniques d'arbre moteur, les va-et-vient de l'arbre moteur alternent entre -3600 degrés (d'angle d'arbre moteur) et +3600 degrés (d'angle d'arbre moteur) environ, ce qui correspond à des déplacements angulaires du volant de conduite de +/- 139 degrés environ.

On notera par ailleurs que, de manière connue en soi, l'information de position angulaire de l'arbre 5 du moteur d'assistance 2 peut être fournie par un capteur de position relative, de type « resolver », ici avantageusement intégré de série au moteur d'assistance 2.

Ce choix de mesure de la position angulaire, choix qui n'est nullement restrictif au regard du principe de l'invention, explique que l'on puisse également, le cas échéant, exprimer initialement ladite position angulaire dans une unité de type « degré électrique », qui tient compte du nombre de pôles statoriques du resolver, plutôt qu'en « degrés mécaniques ».

De préférence, le signal bruité *Signal* qui fait l'objet du traitement selon l'invention est constitué par un signal dit « signal de couple moteur » qui est représentatif de l'effort d'assistance $C_{assist}$ qui est délivré par le moteur d'assistance 2 de la direction (et plus particulièrement qui est représentatif du couple, en l'espèce du couple électromagnétique, fourni par ledit moteur d'assistance).

A ce titre, le signal bruité *Signal* utilisé pour l'étape (a) de détection de transitions 4' est de préférence constitué par la consigne d'effort ou de couple $C_{Mot}$ qui est appliquée au moteur d'assistance 2, ou bien encore par une valeur mesurée de l'effort ou du couple $C_{assist}$ qui est effectivement restitué par le moteur d'assistance 2.

En pratique, dans les situations de vie envisagées pour le véhicule, la valeur de la consigne $C_{Mot}$ appliquée au moteur d'assistance 2, et la valeur de l'effort d'assistance $C_{assist}$ qui est effectivement fourni par ledit moteur d'assistance 2, sont extrêmement proches, voire égales, de telle sorte que ces deux signaux peuvent être utilisés de manière équivalente dans le cadre de l'invention.

C'est pourquoi, de façon préférentielle, et par commodité de description, on pourra assimiler dans ce qui suit le signal bruité *Signal* au « signal de couple moteur », et plus particulièrement à la consigne d'effort (consigne de couple) $C_{Mot}$ appliquée au moteur d'assistance 2.

Avantageusement, l'application du procédé selon l'invention à un signal bruité qui est représentatif de l'effort d'assistance $C_{assist}$ fourni par le moteur d'assistance 2 permet de détecter, dans ledit signal bruité, des transitions 4' qui correspondent à des chutes (en valeur absolue) de l'effort d'assistance, et plus particulièrement à des chutes (de hauteur H sur les figures 1 et 3) qui sont la conséquence de l'inversion des frottements internes qui se produit lors des inversions de braquage 4.

En effet, toute inversion de braquage 4 provoque un basculement (une inversion) du sens de déplacement des organes de direction.

Or, en pratique, les efforts résistants dus aux frottements internes au mécanisme de direction, qui tendent à s'opposer à la manoeuvre de braquage, sont de signe opposé au signe du déplacement (et plus particulièrement au signe de la vitesse de déplacement) des organes de direction.

L'effort d'assistance possède quant à lui *in fine* une fonction motrice, c'est-à-dire qu'il tend à entraîner en déplacement les organes de direction dans le sens de braquage considéré, voulu par le conducteur, à l'encontre des efforts résistants, parmi lesquels les efforts dus aux frottements internes.

En tout état de cause, le basculement du sens de manoeuvre de braquage de la direction, et donc le basculement du sens de déplacement des organes de direction, provoque quasi-simultanément d'une part la disparition d'une première composante d'effort résistant, attribuable aux frottements qui s'opposaient, avant l'inversion de braquage, au déplacement des organes de direction dans le premier sens (par convention, vers la gauche), et d'autre part l'apparition d'une nouvelle (seconde) composante d'effort résistant, également attribuable aux frottements, mais de signe opposé à la première composante d'effort résistant, et qui s'oppose cette fois, après l'inversion de braquage, au déplacement des organes de direction dans le second sens (vers la droite) opposé au premier sens.

La présence de frottements, et plus particulièrement l'inversion du sens d'action des frottements lors de l'inversion du sens de braquage, est donc à l'origine d'un phénomène d'hystérésis qui se traduit, lors de l'inversion du sens de braquage, par une chute (en valeur absolue) de l'effort résistant, et par conséquent par une chute de l'effort d'assistance qui est délivré par le moteur d'assistance pour contrer (et surmonter) ledit effort résistant.

Par ailleurs, on notera que les signaux de consigne d'effort $C_{Mot}$ et/ou de mesure de l'effort d'assistance $C_{assist}$ effectivement délivré par le moteur présentent l'avantage d'être disponibles et facilement exploitables au sein de la direction assistée.

En particulier, le signal de consigne d'effort $C_{Mot}$ destiné à être appliqué au moteur d'assistance 2 est nécessairement connu en permanence, puisqu'il constitue systématiquement une donnée de sortie du module d'application des lois d'assistance 3 de la direction assistée.

L'exploitation de ce signal de consigne $C_{Mot}$ relève donc d'une mise en oeuvre très simple.

L'information relative à la mesure de l'effort (ou du couple) d'assistance $C_{assist}$ effectivement délivré par le moteur d'assistance 2 peut quant à elle être renseignée, si nécessaire, par ledit moteur d'assistance 2 lui-même (ou plus particulièrement par le contrôleur intégré audit moteur), si ledit moteur d'assistance est équipé en série d'un capteur d'effort, et plus particulièrement d'un capteur de couple électromagnétique idoine.

Ladite mesure de l'effort d'assistance $C_{assist}$ peut bien entendu, à titre alternatif, être obtenue par tout autre capteur d'effort (ou de couple) externe approprié, tel qu'un capteur de couple rapporté sur l'arbre 5 du moteur d'assistance 2.

Selon une variante possible de mise en oeuvre du procédé, on pourra considérer comme « signal de couple moteur », représentatif de l'effort d'assistance $C_{assist}$ délivré par le moteur d'assistance 2, et donc utiliser comme signal bruité *Signal,* l'effort de traction ou de compression qui s'exerce sur la crémaillère de direction (longitudinalement, selon l'axe de translation de ladite crémaillère).

Un tel signal pourra par exemple être fourni par des jauges extensométriques mesurant les déformations de la crémaillère, ou par tout autre capteur d'effort approprié.

Globalement, pour la (simple) détection des transitions 4', ici la détection des inversions de braquage, selon l'invention, on peut en effet exploiter, en tant que « signal bruité », tout signal dont la valeur est sensible au type de transition 4' recherché.

Ici, on pourra donc employer tout signal sensible à une inversion des frottements, c'est-à-dire tout signal dont la valeur est affectée par tout ou partie des frottements (internes) qui s'exercent sur la direction de telle manière que ledit signal subit une variation (ici une chute) perceptible lors de l'inversion de braquage (et donc lors de l'inversion desdits frottements).

Par ailleurs, on notera que, en tenant compte du rapport d'entraînement entre le moteur d'assistance 2 et la crémaillère de direction, on peut indifféremment exprimer le signal de couple moteur $C_{Mot}$ sous forme d'un couple moteur ou bien sous forme d'un effort linéaire équivalent de crémaillère, sans modifier le principe général de l'invention.

Ainsi, à titre d'exemple, le signal de couple moteur $C_{Mot}$ de la figure 1, qui est homogène à un couple (exprimé en N.m) sur ladite figure 1, peut ainsi être également converti, par commodité et par simple convention de représentation, sous la forme d'un effort linéaire équivalent, exprimé en Newtons, et plus précisément en kilo-Newtons, tel que cela apparaît sur la figure 2 ou sur la figure 3.

Par ailleurs, bien qu'il ne soit pas exclu de travailler avec des signaux *Signal,* $C_{Mot}$ (...), et notamment un signal de couple moteur $C_{Mot}$, analogiques, on utilisera de préférence un ou des signaux *Signal,* $C_{Mot}$ (...), et notamment un signal de couple moteur $C_{Mot}$, numériques, le procédé conforme à l'invention étant particulièrement bien adapté au traitement des signaux numériques.

Selon l'invention, au cours de l'étape (a) de détection de transition 4', on soumet le signal bruité *Signal,* qui est porteur d'une information utilisée pour la gestion de la direction assistée (ici par exemple une information concernant l'évolution de la valeur du couple moteur, dont la chute renseigne sur la survenance d'une inversion de braquage 4), à une sous-étape (a1) de dérivation, au cours de laquelle on évalue la dérivée temporelle du signal bruité $\dfrac{\partial Signal}{\partial t}$ (ici au moyen du module de dérivation 6, sur la figure 4).

En pratique, on peut appliquer à cet effet toute méthode de dérivation permettant de déterminer la variation du signal bruité *Signal* par unité de temps (c'est-à-dire la pente de la courbe représentative dudit signal), en l'espèce entre deux instants séparés par un intervalle de temps (période d'échantillonnage) prédéterminé suffisamment restreint.

A titre indicatif, la période d'échantillonnage (dite aussi « pas » d'échantillonnage) pourra être comprise entre 0,5 ms et 10 ms.

Selon l'invention, au cours de l'étape (a) de détection de transition, et après avoir évalué la dérivée temporelle du signal bruité lors de la sous-étape (a1) de dérivation, on soumet le signal bruité à une sous-étape (a2) de filtrage sélectif, ici réalisée dans un module de filtrage 8, 9, au cours de laquelle on compare la dérivée temporelle $\frac{\partial Signal}{\partial t}$ du signal bruité à un seuil de variation $S_{pic}$ prédéterminé afin de détecter l'apparition d'un pic de dérivée 7, supérieur audit seuil de variation $S_{pic}$.

Un tel pic de dérivée 7, supérieur audit seuil de variation prédéterminé, signale en effet une transition 4' correspondant à une variation rapide (voire à une quasi-discontinuité) du signal bruité *Signal,* et plus particulièrement à une chute (un rapprochement de zéro), en valeur absolue, dudit signal bruité *Signal.*

Dans l'exemple d'application préférée susmentionné, un tel pic de dérivée 7 peut donc signaler une inversion du sens de braquage 4 de la direction.

Tel que cela a été dit plus haut, et tel que cela est bien visible sur la figure 1, la transition 4', due ici à une inversion de braquage 4, se traduit, du fait de l'inversion concomitante des frottements, par une variation, en l'espèce une chute, du signal bruité *Signal* (signal de couple moteur $C_{Mot}$).

La chute du signal bruité *Signal* présente une hauteur $\underline{H}$ relativement importante (de l'ordre de 2,5 N.m de couple moteur dans l'exemple de la figure 1) et une durée relativement courte (typiquement inférieure à la demi-seconde, et par exemple comprise entre 100 ms et 300 ms).

Ladite chute se signale donc par un décrochement de forte pente du signal bruité, ici du signal de couple moteur $C_{Mot}$, tel que cela est bien visible sur la figure 1, et se traduit ainsi par un accroissement important et soudain de la valeur de la dérivée temporelle dudit signal bruité $\frac{\partial Signal}{\partial t}$, ou plus particulièrement ici, de la valeur de la dérivée temporelle du signal de couple moteur $\frac{\partial C_{Mot}}{\partial t}$, sous forme d'un pic de dérivée 7, tel que cela est illustré sur la figure 2.

Les inventeurs ont ainsi constaté que les transitions 4', et plus particulièrement les inversions de braquage 4, sont signalées par des pics de dérivée 7, identifiables car ils présentent une valeur supérieure à une valeur seuil de pente, dite « seuil de variation » $S_{pic}$, c'est-à-dire que lesdits pics 7 vérifient :

$$\frac{\partial Signal}{\partial t} \geq S_{pic}$$

et donc, plus particulièrement :

$$\frac{\partial Signal}{\partial t} = \frac{\partial C_{Mot}}{\partial t} \geq S_{pic}$$

Typiquement, notamment dans l'exemple considéré sur la figure 2, les pics 7 de la dérivée temporelle du signal de couple moteur (ou, plus particulièrement, les pics de la dérivée temporelle de l'effort équivalent exercé sur la crémaillère) caractéristiques d'une inversion de braquage 4 étaient compris dans une plage dite « plage de pic » supérieure à 30 kN/s, et en l'espèce s'étendant de 30 kN/s à 65 kN/s, et plus particulièrement de 35 kN/s à 50 kN/s.

Le seuil de variation prédéterminé $S_{pic}$ peut alors être choisi comme inférieur ou égal à la plage de pic prévisible, et notamment être égal au ou proche du seuil inférieur de ladite plage. Par exemple, le seuil de variation $S_{pic}$ pourra être ici fixé à 30 kN/s.

Au cours de la sous-étape (a2) de filtrage sélectif, on évalue également la durée ($d_{pic}$) de maintien du pic de dérivée 7, pendant laquelle la dérivée temporelle du signal bruité $\frac{\partial Signal}{\partial t}$ se maintient au-dessus dudit seuil de variation ($S_{pic}$), et l'on vérifie si ladite durée de maintien de pic ($d_{pic}$) atteint ou dépasse un seuil de durée minimale ($d_0$) prédéterminé.

Avantageusement, cette seconde condition (de durée) posée par le filtrage sélectif constitue une précaution supplémentaire dans l'identification des transitions 4' qui sont véritablement représentatives d'un phénomène comportemental de la direction, du conducteur, ou du véhicule, et notamment dans l'identification d'inversions de braquage 4, dans la mesure où ledit filtrage sélectif permet d'opérer une distinction entre d'une part les pics de dérivée 7 qui correspondent véritablement à des transitions 4' qui affectent la valeur surveillée (ici l'amplitude) du signal bruité, et d'autre part les pics de dérivée de bruit 10 (figure 2) qui sont provoqués par le bruit de fond qui perturbe le signal bruité (ici le signal de couple moteur $C_{Mot}$).

En effet, le bruit créant des fluctuations aléatoires et rapides au sein du signal bruité *Signal,* il n'est pas exclu que, ponctuellement, ledit bruit provoque dans ledit signal l'apparition d'une variation (pente) qui serait supérieure au seuil de variation $S_{pic}$, et qui pourrait être interprétée, à tort, sur la seule base du premier critère de détection par le calcul de la dérivée temporelle, comme une transition 4' (une inversion de braquage 4).

Cependant, les inventeurs ont constaté que le bruit, phénomène à caractère sensiblement périodique, présentait une demi-période caractéristique qui est strictement inférieure à la durée de chute du signal bruité lui-même, et plus particulièrement du signal de couple moteur.

La durée des pics de dérivée de bruit 10, provoqués par le bruit, étant sensiblement égale à la demi-période dudit bruit (demi-période pendant laquelle le bruit croît, ou au contraire décroît, de façon monotone, entre le minimum et le maximum de l'oscillation concernée, ou inversement), il est donc possible d'isoler les pics de dérivée 7 pertinents, représentatifs d'une transition 4' (inversion effective de braquage), en excluant, selon un second critère complémentaire du premier critère, les pics de dérivée (de bruit 10) qui présentent une durée strictement inférieure à la durée caractéristique de la transition attendue (ici la durée d'une inversion de braquage 4).

De préférence, le seuil de durée minimale $d_0$ est donc choisi comme égal ou supérieur à la demi-période maximale caractéristique du bruit affectant le signal bruité *Signal.*

Ladite demi-période maximale caractéristique (prévisible) du bruit pourra notamment être estimée à partir de simulations ou de campagnes d'essais.

De préférence, et préférentiellement de manière cumulative avec le choix de dimensionnement proposé ci-dessus, le seuil de durée minimale $d_0$ pourra être choisi comme strictement inférieur à la durée caractéristique des transitions 4' à détecter.

Cette durée caractéristique (prévisible) des transitions 4' pourra également être estimée à partir de simulations ou de campagnes d'essais

A titre d'exemple, particulièrement bien adapté à la détection d'inversions de braquage, on pourra fixer le seuil de durée $d_0$ minimale à une valeur comprise entre 30 ms et 40 ms (alors que la durée caractéristique de la transition, et plus particulièrement de la chute provoquée par une inversion de braquage, est égale ou supérieure à 100 ms).

Concrètement, le module de filtrage 8, 9 pourra comporter une bascule de détection de pic, placée sous la double dépendance d'une part d'un module de comparaison 8, assurant la comparaison de la dérivée temporelle au seuil de variation $S_{pic}$, et d'autre part d'une horloge 9 chronométrant la durée écoulée depuis que ledit module de comparaison 8 a détecté le franchissement du seuil de variation $S_{pic}$, de telle manière que ladite bascule renvoie un signal de détection (signal d'identification de pic) sitôt que sont réunies les deux conditions cumulatives pour confirmer que l'on est en présence d'un pic 7 dû à une transition 4' (ici à une inversion de braquage 4).

Selon une variante préférentielle de l'invention, l'étape (a) de détection de transition est suivie d'une étape (b) de caractérisation de transition au cours de laquelle on identifie un instant de début de pic $t_{déb}$ qui correspond à l'instant auquel la dérivée temporelle du signal

bruité $\dfrac{\partial Signal}{\partial t}$ passe au-dessus du seuil de variation $S_{pic}$, et l'on identifie un instant de fin de pic $t_{fin}$ qui correspond à l'instant auquel la dérivée temporelle du signal

bruité $\dfrac{\partial Signal}{\partial t}$ redescend en-dessous dudit seuil de variation $S_{pic}$.

Avantageusement, on peut ainsi, lorsqu'une transition 4' est détectée (et validée comme telle), caractériser précisément la situation temporelle (par horodatage) de la transition 4' et l'étendue temporelle (durée) de ladite transition 4'.

La transition 4', et plus particulièrement les instants formant les bornes de l'intervalle temporel sur lequel s'étend ladite transition 4', peuvent alors servir de points de repère temporels, notamment pour évaluer quelles étaient les valeurs prises par un signal (par exemple le signal bruité, ou tout autre signal utile) juste avant et juste après ladite transition 4', ce qui permet de connaître précisément l'état dans lequel se trouvait la direction (et/ou le véhicule) avant et après ladite transition 4', et ainsi de quantifier les changements survenus à l'occasion de cette transition.

Afin d'encadrer temporellement la transition 4', on pourra choisir, comme instants d'observation de l'état de la direction (ou du véhicule), un premier instant de référence t1 qui est égal ou antérieur à l'instant de début de pic $t_{déb}$, et un second instant de référence t2 qui est égal ou postérieur à l'instant de fin de pic $t_{fin}$.

Tel que cela sera détaillé plus bas, un éventuel élargissement de l'intervalle temporel [t1, t2] défini par les premier et second instants de référence, par rapport à l'intervalle identifié de début et de fin de pic [$t_{déb}$, $t_{fin}$], permet de s'assurer que l'on considère bien la transition 4' complète, sans la tronquer, et ainsi que l'on ne fausse pas l'évaluation des états de la direction (et/ou du véhicule) que l'on observe de part et d'autre de ladite transition, aux premier et second instants de référence t1, t2.

Bien entendu, le procédé conforme à l'invention utilisera de préférence une base de données permettant de stocker dans une mémoire l'historique des différentes valeurs successivement prises par le signal (ou les signaux) utilisé(s) par ledit procédé, sur une période d'enregistrement qui sera choisie supérieure à la durée prévisible des transitions 4'.

Ainsi, on pourra, après qu'un pic de dérivée 7 aura été identifié, remonter dans le passé du signal étudié pour connaître la (ou les) valeur(s) prise(s) par ledit signal à un instant (typiquement le premier instant de référence t1) qui précède la survenance dudit pic de dérivée et/ou à un instant (typiquement le second instant de référence t2) qui suit ledit pic de dérivée 7.

Avantageusement, afin de ne pas consommer inutilement de l'espace mémoire, la base de données sera constamment rafraîchie, sur une période d'enregistrement glissante, de sorte à ne conserver, à un instant considéré, que les informations qui peuvent être effectivement utiles pour retrouver les valeurs passées du signal qui sont pertinentes pour effectuer les calculs de gestion de la direction audit instant considéré.

A titre indicatif, la période d'enregistrement pourra être comprise entre 0,5 s (500 ms) et 1 s, et de préférence égale à 500 ms.

Selon une variante préférentielle de mise en oeuvre du procédé, qui permet d'estimer les frottements (internes) qui règnent dans la direction, le procédé selon l'invention peut comprendre une étape (d) d'évaluation de frottement, au cours de laquelle on acquiert un signal $C_{action}$, dit « signal d'effort d'actionnement », qui est représentatif de l'effort (et plus particulièrement du couple) d'actionnement total exercé conjointement sur la direction assistée par le conducteur et par le moteur d'assistance 2, et l'on évalue, ici au moyen d'un module d'évaluation de frottement 11, l'effort de frottement $\underline{F}$ qui s'oppose aux mouvements de braquage de la direction assistée, à partir de la différence $\Delta C_{action}$ entre deux valeurs prises par ledit signal d'effort d'actionnement $C_{action}$ respectivement avant et après l'inversion de braquage 4.

En d'autres termes, le procédé comprend une étape (d) d'évaluation de frottement au cours de laquelle on évalue le frottement à partir de la chute $\Delta C_{action}$ du signal d'effort d'actionnement $C_{action}$ qui se produit lors de l'inversion de braquage 4 détectée par l'étape (a).

En effet, et pour les mêmes raisons que celles détaillées plus haut pour expliquer la chute H du signal de couple moteur $C_{Mot}$ en cas d'inversion de braquage, une inversion de braquage 4 se traduit également, plus globalement, par une chute $\Delta C_{action}$ du signal d'effort d'actionnement $C_{action}$, due à l'inversion du signe des efforts de frottement.

Dans l'absolu, on pourrait d'ailleurs, de manière sensiblement équivalente, et sans dénaturer le principe de l'invention, évaluer les frottements $\underline{F}$ à partir du signal de couple moteur $C_{Mot}$ seul (tel qu'il est renseigné par la consigne appliquée au moteur, ou par le couple électromagnétique délivré par le moteur, tel que cela a été mentionné plus haut), et plus particulièrement à partir de la différence entre deux valeurs prises par ledit signal de couple moteur $C_{Mot}$ seul (plutôt que par le signal d'effort d'actionnement total $C_{action}$), respectivement avant et après l'inversion de braquage, c'est-à-dire à partir de la hauteur de chute $\underline{H}$ déjà mentionnée plus haut.

Toutefois, afin d'obtenir une évaluation plus précise et plus complète du phénomène de frottement qui affecte la direction, il est préférable d'utiliser, pour le calcul de la hauteur de chute, un signal qui englobe des effets de frottements sur une chaîne cinématique qui soit la plus longue et la plus complète possible, au sein de la direction, et ce afin de prendre en considération le plus grand nombre possible de tronçons de la direction dans lesquels des frottements peuvent prendre naissance, et donc de négliger le moins de sources de frottement interne possible.

En d'autres termes, il est préférable de recueillir des signaux d'efforts dans des zones situées le plus en amont possible de chaque chaîne cinématique comprise entre un élément actionneur amont de la direction d'une part (à savoir respectivement le conducteur et le moteur d'assistance), et les organes effecteurs aval (biellettes et roues directrices) d'autre part, afin que ces signaux englobent le maximum de frottements qui s'opposent à la manoeuvre de la direction, et en l'occurrence englobent l'ensemble des frottements qui prennent naissance dans toute la chaîne cinématique située en aval du ou des actionneurs concernés.

En outre, il est également préférable de prendre en considération un signal d'effort d'actionnement total, qui tient compte non seulement de la contribution du moteur d'assistance 2, mais également de la contribution manuelle du conducteur.

En effet, la chute (en valeur absolue) d'un tel signal d'effort d'actionnement est ainsi représentative des frottements qui affectent le mécanisme de direction aussi bien dans sa portion "motorisée" (moteur d'assistance, réducteur, crémaillère...) que dans (tout ou partie de) sa portion "manuelle", dite aussi portion "conducteur" (volant de conduite, colonne de direction, liaison pignon/crémaillère...)

Pour ces raisons, le signal d'effort d'actionnement $C_{ation}$ est de préférence formé, tel que cela est illustré sur la figure 4, par la somme d'une part d'un signal de couple volant représentatif du couple volant $C_{volant}$ exercé par le conducteur sur le volant de conduite, et d'autre part du signal de couple moteur $C_{Mot}$.

Avantageusement, on notera que les signaux de couple volant $C_{volant}$ et de couple moteur $C_{Mot}$ sont déjà disponibles à tout instant au sein de la plupart des directions assistées, et sont de ce fait aisément exploitables, ce qui simplifie la mise en oeuvre de l'invention.

Le signal de couple volant $C_{volant}$ pourra par exemple correspondre à une mesure du couple volant $C_{volant}$ obtenue par un capteur de couple volant approprié, tel qu'un capteur magnétique de couple mesurant les déformations élastiques d'une barre de torsion placée entre le volant de conduite et la colonne de direction.

Un tel signal de couple volant $C_{volant}$ permettra avantageusement de prendre en considération tous les frottements apparaissant en aval de ladite barre de torsion, et notamment les frottements qui naissent dans la liaison entre le pignon fixé au tronçon inférieur de la colonne de direction et la crémaillère.

Le signal de couple moteur $C_{Mot}$ adapté à cette application pourra quant à lui être obtenu par tout moyen approprié décrit plus haut.

A ce titre, on remarquera que, lorsque le signal de couple moteur $C_{Mot}$ est destiné à quantifier la hauteur de chute (lors de l'étape (d) d'évaluation de frottement), et non plus seulement à détecter les inversions de braquage (lors de l'étape (a) de détection), et ce, que ledit signal de couple moteur $C_{Mot}$ soit utilisé seul ou bien en combinaison avec le signal de couple volant pour former le signal total d'effort d'actionnement $C_{action}$, ledit signal de couple moteur $C_{Mot}$ sera de préférence recueilli le plus en amont possible par rapport au moteur d'assistance 2, et sera donc de préférence constitué par la consigne appliquée audit moteur d'assistance, ou par la mesure du couple électromagnétique qui est délivré par ledit moteur d'assistance, tel que cela a été dit plus haut.

Afin d'évaluer le frottement $\underline{F}$, on détermine de préférence quelle était la valeur $C_{action}(t1)$, dite « valeur d'effort d'actionnement antérieure à l'inversion de braquage », prise par le signal d'effort d'actionnement au premier instant de référence t1, qui est égal ou antérieur à l'instant de début de pic $t_{déb}$, on détermine quelle était la valeur $C_{action}(t2)$, dite « valeur d'effort d'actionnement postérieure à l'inversion de braquage », prise par le signal d'effort d'actionnement au second instant de référence t2, qui est égal ou postérieur à l'instant de fin de pic $t_{fin}$, puis on évalue le frottement à partir du calcul de la différence entre la valeur d'effort d'actionnement postérieure à l'inversion de braquage $C_{action}(t2)$ et la valeur d'effort d'actionnement antérieure à l'inversion de braquage $C_{action}(t1)$, c'est-à-dire :

$$\Delta C_{action} = |C_{action}(t2) - C_{action}(t1)|.$$

Plus particulièrement, on pourra considérer que la valeur des efforts de frottement $\underline{F}$ qui affectent la manoeuvre de la direction à l'instant considéré (c'est-à-dire au moment de l'inversion de braquage 4 considérée) est égale, eu égard au phénomène d'hystérésis évoqué plus haut, à la demi-différence entre la valeur d'effort d'actionnement postérieure à l'inversion de braquage et la valeur d'effort d'actionnement antérieure à l'inversion de braquage, c'est-à-dire : $F = \Delta C_{action} / 2$.

Avantageusement, l'utilisation d'une dérivée temporelle du signal bruité *Signal* approprié (ici le signal de couple moteur $C_{Mot}$) ainsi que d'une référence temporelle aux instants de début $t_{déb}$ et de fin $t_{fin}$ de pic de dérivée 7 qui sont identifiés à partir de ladite dérivée permet de détecter précisément le moment où se produit l'inversion de braquage 4, et donc d'améliorer la fiabilité et la précision de l'évaluation des caractéristiques de la chute du signal d'effort d'actionnement.

En mesurant l'effort d'actionnement à des instants de référence t1, t2 qui sont calculés à partir des instants de début et de fin de pic et qui encadrent au plus près l'inversion réelle de braquage 4 (et donc la chute du signal d'effort d'actionnement), l'invention permet de déterminer précisément quelle était la valeur exacte de l'effort d'actionnement $C_{ation}$ juste avant et juste après ladite inversion de braquage.

On évite ainsi tout retard ou approximation dans la mesure, qui pourrait sinon conduire à considérer une valeur du signal d'actionnement non représentative de la hauteur véritable de chute, car mesurée en un point de mesure temporellement trop éloigné de ladite chute.

L'invention permet ainsi d'évaluer le frottement $\underline{F}$ de façon réactive et fiable, car elle réduit considérablement les sources d'erreurs, et les lenteurs, qui entachaient jusqu'à présent les procédés d'estimation de frottement basés sur une surveillance de la position angulaire du volant de conduite.

Selon une possibilité de mise en oeuvre, applicable du reste quel que soit l'usage que l'on fait des instants de référence t1, t2, on pourra choisir, arbitrairement, de faire coïncider le premier instant de référence t1 avec l'instant de début de pic $t_{déb}$ (c'est-à-dire poser t1 = $t_{déb}$), et/ou, en complément ou alternativement, choisir de faire coïncider le second instant de référence t2 avec l'instant de fin de pic $t_{fin}$ (c'est-à-dire poser t2 = $t_{fin}$).

Toutefois, selon une seconde possibilité, le premier instant de référence t1 est de préférence choisi strictement antérieur à l'instant de début de pic $t_{déb}$ (t1 < $t_{déb}$), ledit premier instant de référence précédant ledit instant de début de pic d'une valeur d'avance $\delta1$ (c'est-à-dire : t1 = $t_{déb}$ - $\delta1$), et/ou le second instant de référence t2 est choisi strictement postérieur à l'instant de fin de pic (t2 > $t_{fin}$), ledit second instant de référence suivant ledit instant de fin de pic d'une valeur de retard $\delta2$ (c'est-à-dire : t2 = $t_{fin}$ + $\delta2$).

A titre indicatif, la valeur d'avance $\delta1$ est de préférence comprise entre 20 ms et 100 ms, et par exemple sensiblement égale à 50 ms (cinquante millisecondes).

A titre indicatif, la valeur de retard $\delta2$ est de préférence comprise entre 20 ms et 100 ms, et par exemple sensiblement égale à 50 ms (cinquante millisecondes).

En d'autres termes, on élargit de préférence l'intervalle temporel [t1 ; t2], et ce préférentiellement des deux côtés, aussi bien en retard qu'en avance, en particulier lorsque ledit intervalle est celui sur lequel on calcule la hauteur de chute $\Delta C_{action}$ du signal considéré (ici le signal d'effort d'actionnement).

Cet élargissement de l'intervalle de mesure par rapport à l'intervalle brut défini par les instants de début et de fin de pic, élargissement qui représente de préférence au moins 10 ms (en avance aussi bien qu'en retard), et par exemple préférentiel 50 ms (en avance aussi bien qu'en retard : $\delta1 = \delta2 = 50$ ms), permet de s'assurer que la durée écoulée (c'est-à-dire t2-t1) entre le premier instant de référence t1 et le second instant de référence t2 est effectivement supérieure ou égale (et le cas échéant tout juste supérieure) à la durée effective de la chute (complète) du signal correspondant à la transition 4'.

Dans le cas de l'application à l'évaluation du frottement, cela permet de s'assurer que l'on couvre toute la durée de la chute du signal qui est imputable à l'inversion de braquage 4, et donc au frottement.

Ainsi, le procédé conforme à l'invention permet de garantir que l'on mesure bien les valeurs extrêmes du signal d'effort d'actionnement qui correspondent à l'intégralité de la hauteur de chute dudit signal, caractéristique de l'inversion de braquage, sans tronquer une partie de ladite chute.

En outre, les valeurs d'avance $\delta1$ et de retard $\delta2$ restent toutefois relativement inférieures à des seuils d'élargissement maximal prédéterminés, choisis de telle sorte que le premier instant de référence t1 et le second instant de référence t2 restent au voisinage temporel immédiat du domaine de la transition (du domaine de la chute), dans des domaines "frontaliers" de la transition, domaines frontaliers dans lesquels la valeur du signal concerné reste quasiment constante par rapport à la valeur qui est prise par ledit signal en limite de transition (les évolutions de ladite valeur dans les domaines frontaliers étant par exemple contenues dans une plage d'amplitude inférieure ou égale à 10 %, à 5 %, voire inférieure ou égale à 1 % de la hauteur de chute).

Ici, du fait que, en dehors du domaine de la chute imputable à l'inversion du frottement, le signal de couple moteur $C_{mot}$, ainsi que le signal d'effort d'actionnement $C_{action}$, varient bien plus lentement que pendant ladite chute, le faible élargissement proposé (l'avance $\delta 1$ et le retard $\delta 2$ étant typiquement inférieurs à 200 ms, voire à 100 ms, et de préférence égaux chacun à 50 ms) permet de maintenir le premier instant de référence t1 et le second instant de référence t2 au voisinage temporel immédiat du domaine de la chute, dans des domaines "frontaliers" de ladite chute, domaines frontaliers dans lesquels la valeur du signal concerné reste quasiment constante par rapport à la valeur qui est prise par ledit signal en limite de chute.

Ainsi, les mesures des valeurs du signal prises au premier et au second instant de référence t1, t2, c'est-à-dire ni trop tôt, ni trop tard par rapport à la chute imputable au frottement, reflètent fidèlement la valeur réelle de l'effort d'actionnement $C_{ation}$ (ou, respectivement de couple moteur $C_{Mot}$) considéré aux limites de ladite chute.

En définitive, le procédé selon l'invention permet donc de mesurer sensiblement une hauteur de chute qui correspond à toute la contribution propre au frottement et rien qu'à la contribution propre au frottement.

Ledit procédé permet donc avantageusement d'obtenir, quasiment en temps réel, une mesure fiable, précise et régulièrement mise à jour, du frottement $\underline{F}$ véritable qui affecte la direction à l'instant considéré, ce que ne permettaient pas les procédés connus, qui reposaient sur une approximation assez grossière du frottement, réalisée à partir de modèles de frottement théoriques préétablis.

On notera que, selon une variante de mise en oeuvre de l'invention, on pourrait, au lieu de calculer le premier et le second instant de référence t1, t2 respectivement à partir de l'instant de début de pic $t_{déb}$ et de l'instant de fin de pic $t_{fin}$, caractériser le pic de dérivée 7 par un instant de pic unique, correspondant par exemple à l'instant de début du pic, à l'instant de fin de pic, ou à l'instant moyen situé au milieu desdits instants de début et de fin de pic, puis fixer arbitrairement les premier et second instants t1, t2 de référence de part et d'autre dudit instant de pic unique, de manière à englober dans l'intervalle ainsi défini la durée caractéristique prévisible des chutes de signal ; par exemple, on pourrait considérer que le premier instant de référence est situé 100 ms avant l'instant de pic unique, et le second instant 200 ms après ledit instant de pic unique.

Bien entendu, ce choix des instants de référence t1, t2 n'affecte nullement le principe général d'évaluation du frottement décrit plus haut.

Quelle que soit du reste la définition retenue pour le premier et le second instant de référence t1, t2, la période d'enregistrement du signal d'effort d'actionnement $C_{ation}$ (et/ou du signal de couple moteur $C_{Mot}$), qui permet de garder provisoirement en mémoire les valeurs dudit signal utiles à la gestion de la direction, et plus particulièrement à l'évaluation du frottement, à l'instant considéré, sera bien entendu supérieure à la largeur de l'intervalle temporel [t1 ; t2] compris entre lesdits premier et second instants de référence, et, plus particulièrement, supérieure à la durée maximale prévisible de chute majorée du retard $\delta 2$ et de l'avance $\delta 1$.

Par ailleurs, le seuil de variation $S_{pic}$ et/ou, s'il y a lieu, le seuil de durée minimale $d_0$ de maintien de pic et/ou les valeurs d'avance $\delta 1$ et de retard $\delta 2$, sont de préférence ajustés en fonction de l'accélération angulaire $\ddot{\theta}_{volant}$ du volant de conduite.

En d'autres termes, l'invention permet d'actualiser, de façon dynamique, le paramétrage utilisé pour la détection des inversions de braquage et/ou l'évaluation du frottement, en fonction de différents paramètres tels que l'accélération angulaire $\ddot{\theta}_{volant}$ du volant de conduite, et ce afin d'optimiser au cas par cas la fiabilité et la réactivité du procédé.

En effet, on comprendra aisément, par exemple, que la durée de chute du signal de couple moteur $C_{Mot}$ (respectivement du signal d'effort d'actionnement $C_{action}$) est d'autant plus courte, et sa pente (sa dérivée temporelle) d'autant plus élevée, que la manoeuvre du volant est rapide.

Ainsi, par exemple, lorsque le conducteur exécute rapidement une manoeuvre de braquage immédiatement suivie d'une manoeuvre de contrebraquage, de telle sorte que les accélérations angulaires du volant de conduite mises en oeuvre de part et d'autre du point de vitesse nulle correspondant à l'inversion de braquage sont relativement élevées, il est possible d'augmenter la valeur du seuil de variation $S_{pic}$, afin de mieux éliminer le bruit, tout en conservant la possibilité de détecter une chute possédant une forte pente.

De manière alternative ou complémentaire, il est également envisageable, voire souhaitable lorsque l'accélération angulaire du volant augmente, de réduire le seuil de durée minimale de maintien de pic $d_0$, afin de ne pas risquer d'exclure un pic relativement court mais néanmoins représentatif d'une inversion de braquage.

De même, de manière alternative ou complémentaire, il est également envisageable de réduire en pareille situation les valeurs d'avance $\delta 1$ et/ou de retard $\delta 2$ utilisées pour définir les premier et second instants de référence t1, t2, auxquels sont acquises les valeurs extrêmes de l'effort d'actionnement $C_{action}$ permettant d'estimer la hauteur de chute $C_{action}$.

En effet, la durée de chute se raccourcissant lorsque la manoeuvre du volant est plus rapide, il est possible d'encadrer la totalité de la chute dans un domaine temporel plus étroit, sans risquer de tronquer la hauteur de chute.

Avantageusement, la réduction du seuil de durée minimale de maintien de pic $d_0$ et/ou des valeurs d'avance $\delta 1$ et/ou de retard $\delta 2$ permet d'accélérer l'exécution du procédé, et ainsi d'optimiser sa réactivité, sans nuire à sa fiabilité.

Plus globalement, l'adaptation, en temps réel, de la détection des transitions 4' et/ou de l'évaluation du frottement en fonction de la situation de vie du véhicule et/ou de la dynamique du volant de conduite permet d'optimiser les performances du procédé, et de rendre ce dernier particulièrement polyvalent.

Par ailleurs, le procédé selon l'invention pourra comprendre une étape (c) de vérification, au cours de laquelle on vérifie, de préférence de manière cumulative, ici au sein d'un module de vérification 12 sur la figure 4, la réalisation d'une ou plusieurs conditions de mise en oeuvre parmi les conditions suivantes : la vitesse de rotation du volant de conduite $\dot{\theta}_{volant}$ est inférieure ou égale à un seuil de vitesse de volant $\dot{\theta}_{volant\ seuil}$ prédéterminé, l'accélération angulaire du volant de conduite $\ddot{\theta}_{volant}$ est inférieure ou égale à un seuil d'accélération de volant $\ddot{\theta}_{volant\ seuil}$ prédéterminé, l'évolution de la vitesse de lacet $\dot{\psi}$ du véhicule ou de l'accélération latérale $\gamma$ du véhicule en fonction de l'angle d'orientation du volant de conduite $\theta_{volant}$ se trouve dans un domaine sensiblement linéaire.

La condition portant sur la vitesse de rotation du volant de conduite $\dot{\theta}_{volant}$, qui doit être inférieure ou égale à un seuil de vitesse de volant $\dot{\theta}_{volant\ seuil}$ proche de zéro, et par exemple de l'ordre de 5 deg/s, permet de vérifier que la situation de vie du véhicule est compatible avec une inversion de braquage, en s'assurant que la vitesse angulaire du volant se trouve au voisinage de zéro au moment de l'inversion de braquage présumée.

En effet, lors d'une inversion de braquage effective, la vitesse volant s'annule nécessairement au point d'inversion (point de rebroussement) du volant. A l'inverse, l'absence de passage par zéro de la vitesse du volant exclut que l'on se trouve en situation d'inversion de braquage.

La condition portant sur l'accélération angulaire du volant permet quant à elle de procéder à l'évaluation du frottement uniquement lorsque l'accélération du volant, et donc l'accélération des mouvements des organes du mécanisme de direction, est faible, par exemple inférieure ou égale à 100 deg/s², c'est-à-dire uniquement lorsque les efforts inertiels sont inexistants ou négligeables.

On s'assure ainsi que, lors de l'évaluation du frottement, l'état de contrainte du mécanisme de direction, tel que cet état de contrainte est perçu et quantifié par la mesure du couple moteur $C_{Mot}$ et/ou par la mesure de l'effort d'actionnement $C_{action}$, est bien représentatif du phénomène de frottement, et uniquement du phénomène de frottement, et n'est pas faussé par l'apparition d'efforts inertiels.

La condition sur la linéarité de l'évolution de la vitesse de lacet $\dot{\psi}$ du véhicule, ou, de manière équivalente, de l'évolution de l'accélération latérale $\gamma$ du véhicule, en fonction de l'angle d'orientation du volant de conduite $\theta_{volant}$, c'est-à-dire sur la linéarité de la dynamique latérale du véhicule, revient à s'assurer que le véhicule n'est pas en situation de perte d'adhérence, et plus particulièrement ni en survirage, ni en sous-virage.

En effet, une perte d'adhérence (des pneumatiques sur la chaussée) va provoquer une baisse de l'effort résistant que les roues et les biellettes de direction exercent sur la crémaillère, à l'encontre du moteur d'assistance, ce qui va par conséquent entraîner une baisse correspondante de l'effort délivré par le moteur d'assistance, baisse qui sera sans rapport avec l'action des frottements $\underline{F}$ internes, et pourrait donc fausser l'évaluation desdits frottements $\underline{F}$.

Pour vérifier la condition de linéarité, on pourra notamment utiliser des lois empiriques établies lors de campagnes d'essais et associant, pour différentes situations de vie (temps sec, chaussée humide, etc.), et à chaque position angulaire du volant parmi une pluralité de positions angulaires du volant différentes prédéterminées, une vitesse de lacet ou une accélération maximale admissible correspondante.

On considérera alors qu'on se trouve dans le domaine de linéarité, c'est-à-dire dans une situation de vie autorisant une évaluation fiable du frottement, si, pour la position angulaire de volant (ou, de manière équivalente, la position angulaire de l'arbre du moteur d'assistance) mesurée à l'instant considéré, la vitesse de lacet $\dot{\psi}$ ou l'accélération latérale $\gamma$ du véhicule (qui peuvent être par exemple fournies par le système de contrôle de trajectoire ESP, ou par le système d'assistance au freinage ABS), est inférieure à la valeur maximale admissible.

Une telle redondance de vérifications permet d'exclure les cas douteux, et ainsi de ne conserver que les évaluations fiables du frottement, ce qui améliore significativement la robustesse du procédé conforme à l'invention au regard des différentes instabilités qui pourraient l'affecter.

Bien entendu, l'invention concerne également en tant que tel un filtre 6, 8, 9 (représenté en pointillés sur la figure 4) permettant de mettre en oeuvre un procédé selon l'invention.

Les caractéristiques et avantages dudit filtre pourront se déduire *mutatis mutandis* de la description du procédé.

Ainsi, l'invention concerne également un filtre pour la détection de transitions au sein d'un signal bruité, ledit filtre 6, 8, 9 comprenant un module de dérivation 6 qui est structuré pour recueillir le signal bruité *Signal* et en évaluer la dérivée temporelle $\dfrac{\partial Signal}{\partial t}$, ainsi qu'un module de filtrage sélectif 8, 9 qui est structuré d'une part pour comparer ladite dérivée temporelle du signal bruité à un seuil de variation $S_{pic}$ prédéterminé afin de détecter l'apparition d'un pic de dérivée 7, supérieur audit seuil de variation $S_{pic}$, et d'autre part pour évaluer la durée $d_{pic}$ de maintien dudit pic, pendant laquelle la dérivée temporelle du signal bruité $\dfrac{\partial Signal}{\partial t}$ se maintient au-dessus dudit seuil de variation $S_{pic}$, après avoir franchi ledit seuil de variation $S_{pic}$, et pour vérifier si ladite durée de maintien de pic $d_{pic}$ atteint ou dépasse un seuil de durée minimale $d_0$ prédéterminé.

De préférence, le seuil de durée minimale $d_0$ est choisi comme égal ou supérieur à la demi-période maximale caractéristique du bruit affectant le signal bruité.

De préférence, le seuil de durée minimale $d_0$ est choisi comme strictement inférieur à la durée caractéristique des transitions 4' à détecter.

De façon préférentielle, le seuil de durée minimale $d_0$ est compris entre 30 ms et 40 ms.

Par ailleurs, chacun des modules susmentionnés, à savoir chacun des modules d'application de lois de commande 3, de dérivation 6, de filtrage sélectif 8, 9, d'évaluation de frottement 11, et de vérification 12, pourra être formé par un circuit électronique, une carte électronique, un calculateur (ordinateur), un automate programmable, ou tout autre dispositif équivalent.

Chacun des modules susmentionnés pourra présenter une structure de commande physique, liée au câblage de ses composants électroniques, et/ou, de préférence, une structure de commande virtuelle, définie par une programmation informatique.

Lesdits modules pourront être en tout ou partie regroupés, le cas échéant au sein d'un même boîtier, pour former un module de gestion de direction assistée.

Bien entendu, l'invention concerne également en tant que tel tout support de données lisible par un ordinateur et contenant des éléments de code de programme informatique permettant d'exécuter le procédé conforme à l'invention lorsque ledit support est lu par un ordinateur.

On notera enfin que le procédé conforme à l'invention, qui exploite des signaux généralement disponibles au sein des directions assistée, peut être facilement généralisé à toutes les directions assistées, y compris en rattrapage sur de nombreuses directions assistées déjà existantes, par une simple reprogrammation de leur calculateur.

Bien entendu, l'invention n'est nullement limitée aux seules variantes de réalisation décrites dans ce qui précède, mais elle est définie par l'objet des revendications suivantes. Ainsi, l'utilisation du filtre 6, 8, 9, bien que préférentiellement associée à la gestion d'une direction assistée, peut notamment être étendue à toute application de traitement d'un ou plusieurs signaux de gestion d'un véhicule.

**Revendications**

1. Procédé de gestion de direction assistée comprenant une étape (a) de détection de transition (4') dans un signal bruité, au cours de laquelle on soumet un signal bruité (*Signal*), porteur d'une information utilisée pour la gestion de la direction assistée, à une sous-étape (a1) de dérivation, au cours de laquelle on évalue la dérivée temporelle du signal bruité $(\dfrac{\partial Signal}{\partial t})$, puis à une sous-étape (a2) de filtrage sélectif au cours de laquelle on compare ladite dérivée temporelle du signal bruité $(\dfrac{\partial Signal}{\partial t})$ un seuil de variation $(S_{pic})$ prédéterminé afin de détecter l'apparition d'un pic de dérivée (7), supérieur audit seuil de variation $(S_{pic})$, on évalue la durée $(d_{pic})$ de maintien dudit pic de dérivée, pendant laquelle la dérivée temporelle du signal bruité $(\dfrac{\partial Signal}{\partial t})$ se maintient au-dessus dudit seuil de variation $(S_{pic})$, et l'on vérifie si ladite durée de maintien de pic $(d_{pic})$ atteint ou dépasse un seuil de durée minimale $(d_0)$ prédéterminé, ledit procédé étant **caractérisé en ce que** le seuil de durée minimale $(d_0)$ est choisi comme égal ou supérieur à la demi-période maximale caractéristique du bruit affectant le signal bruité (*Signal*), et strictement inférieur à la durée caractéristique des transitions (4') à détecter.

2. Procédé selon la revendication 1 **caractérisé en ce que** le signal bruité (*Signal*) est constitué par un signal dit « signal de couple moteur » $(C_{Mot}, C_{assist})$ qui est représentatif de l'effort d'assistance $(C_{assist})$ délivré par le moteur d'assistance (2) de la direction.

3. Procédé selon l'une des revendications précédentes **caractérisé en ce que** le seuil de durée minimale $(d_0)$ est compris entre 30 ms et 40 ms.

4. Procédé selon l'une des revendications précédentes **caractérisé en ce que** l'étape (a) de détection de transition est suivie d'une étape (b) de caractérisation de transition au cours de laquelle on identifie un instant de début de pic $(t_{déb})$ qui correspond à l'instant auquel la dérivée temporelle du signal bruité $(\dfrac{\partial Signal}{\partial t})$ passe au-dessus du seuil de variation $(S_{pic})$, et l'on identifie un instant de fin de pic $(t_{fin})$ qui correspond à l'instant auquel la dérivée temporelle du signal bruité $(\dfrac{\partial Signal}{\partial t})$ redescend en-dessous dudit seuil de variation $(S_{pic})$.

5. Procédé selon l'une des revendications précédentes **caractérisé en ce que** le seuil de variation $(S_{pic})$

et/ou le seuil de durée minimale ($d_0$) de maintien de pic sont ajustés en fonction de l'accélération angulaire ($\ddot{\theta}_{volant}$) du volant de conduite.

**6.** Filtre pour la détection de transitions (4') au sein d'un signal bruité, ledit filtre comprenant un module de dérivation (6) qui est structuré pour recueillir le signal bruité (*Signal*) et en évaluer la dérivée temporelle $\left(\dfrac{\partial Signal}{\partial t}\right)$, ainsi qu'un module de filtrage sélectif (8, 9) qui est structuré d'une part pour comparer ladite dérivée temporelle du signal bruité $\dfrac{\partial Signal}{\partial t}$ à un seuil de variation ($S_{pic}$) prédéterminé afin de détecter l'apparition d'un pic de dérivée (7), supérieur audit seuil de variation ($S_{pic}$), et d'autre part pour évaluer la durée ($d_{pic}$) de maintien dudit pic, pendant laquelle la dérivée temporelle du signal bruité $\left(\dfrac{\partial Signal}{\partial t}\right)$ se maintient au-dessus dudit seuil de variation ($S_{pic}$), après avoir franchi ledit seuil de variation ($S_{pic}$), et pour vérifier si ladite durée de maintien de pic ($d_{pic}$) atteint ou dépasse un seuil de durée minimale ($d_0$) prédéterminé, **caractérisé en ce que** ledit seuil de durée minimale ($d_0$) est choisi comme égal ou supérieur à la demi-période maximale caractéristique du bruit affectant le signal bruité et strictement inférieur à la durée caractéristique des transitions (4') à détecter.

**7.** Filtre selon la revendication 6 **caractérisé en ce que** le seuil de durée minimale ($d_0$) est compris entre 30 ms et 40 ms.

**Patentansprüche**

**1.** Verfahren zum Verwalten einer Servolenkung, einen Schritt (a) zur Übergangserfassung (4') in einem verrauschten Signal umfassend, im Laufe dessen man ein verrauschtes Signal (*Signal*), Träger einer Information, die für die Verwaltung einer Servolenkung verwendet wird, einem Unterschritt (a1) zur Ableitung unterwirft, im Laufe dessen man die zeitliche Ableitung des verrauschten Signals $\left(\dfrac{\vartheta Signal}{\vartheta t}\right)$ bewertet, danach einem Unterschritt (a2) zur selektiven Filterung, im Laufe dessen man die besagte zeitliche Ableitung des verrauschten Signals $\left(\dfrac{\vartheta Signal}{\vartheta t}\right)$ mit einem vorbestimmten Variationsgrenzwert ($S_{pic}$) vergleicht, um das Auftreten einer Ableitungsspitze (7) zu erfassen, die größer ist, als der Variationsgrenzwert ($S_{pic}$), man die Dauer ($d_{pic}$) des Anhaltens der besagten Ableitungsspitze bewertet, während der sich die zeitliche Ableitung des verrauschten Signals $\left(\dfrac{\vartheta Signal}{\vartheta t}\right)$ über dem besagten Variationsgrenzwert ($S_{pic}$) hält, und man überprüft, ob die besagte Dauer des Anhaltens der Spitze ($d_{pic}$) einen vorbestimmten Mindestdauergrenzwert (do) erreicht oder überschreitet, wobei das besagte Verfahren **dadurch gekennzeichnet ist, dass** der vorbestimmte Mindestdauergrenzwert (do) als größer oder gleich dem maximalen typischen Halbzyklus des Rauschens ist, welches das verrauschte Signal (*Signal*) beeinträchtigt, und streng kleiner als die typische Dauer der zu erfassenden Übergänge (4').

**2.** Verfahren nach Anspruch 1, **dadurch gekennzeichnet, dass** das verrauschte Signal (*Signal*) durch ein "Motormomentsignal" ($C_{MOT}$, $C_{assist}$) genanntes Signal gebildet wird, das repräsentativ für die Unterstützungskraft ($C_{assist}$) ist, die von dem Unterstützungsmotor (2) der Lenkung abgegeben wird.

**3.** Verfahren nach einem der vorstehenden Ansprüche, **dadurch gekennzeichnet, dass** der Mindestdauergrenzwert (do) zwischen 30 ms und 40 ms enthalten ist.

**4.** Verfahren nach einem der vorstehenden Ansprüche, **dadurch gekennzeichnet, dass** auf den Schritt (a) zur Übergangserfassung ein Schritt (b) zur Übergangscharakterisierung folgt, im Laufe dessen man einen Spitzen-Anfangszeitpunkt ($t_{déb}$) identifiziert, der dem Zeitpunkt entspricht, an dem die zeitliche Ableitung des verrauschten Signals $\left(\dfrac{\vartheta Signal}{\vartheta t}\right)$ über den Variationsgrenzwert ($S_{pic}$) hinausgeht, und man einen Spitzen-Endzeitpunkt ($t_{fin}$) identifiziert, der dem Zeitpunkt entspricht, an dem die zeitliche Ableitung des verrauschten Signals $\left(\dfrac{\vartheta Signal}{\vartheta t}\right)$ wieder unter den besagten Variationsgrenzwert ($S_{pic}$) absinkt.

**5.** Verfahren nach einem der vorstehenden Ansprüche, **dadurch gekennzeichnet, dass** der Variationsgrenzwert ($S_{pic}$) und/ oder der Mindestdauergrenzwert (do) des Anhaltens einer Spitze in Abhängigkeit von der Winkelbeschleunigung ($\ddot{\theta}_{volant}$) des Lenkrades angepasst werden.

**6.** Filter zur Übergangserfassung (4') innerhalb eines verrauschten Signals, wobei der besagte Filter ein Ableitungsmodul (6) umfasst, das strukturiert ist, um das verrauschte Signal (*Signal*) aufzunehmen und dessen zeitliche Ableitung $\left(\frac{\vartheta Signal}{\vartheta t}\right)$ zu bewerten, sowie ein selektives Filtermodul (8, 9), das einerseits strukturiert ist, um die besagte zeitliche Ableitung des verrauchten Signals $\left(\frac{\vartheta Signal}{\vartheta t}\right)$ mit einem vorbestimmten Variationsgrenzwert ($S_{pic}$) zu vergleichen, um das Auftreten einer Ableitungsspitze (7) zu erfassen, die größer ist, als der Variationsgrenzwert ($S_{pic}$), und andererseits, um die Dauer ($d_{pic}$) des Anhaltens der besagten Spitze zu bewerten, während der sich die zeitliche Ableitung des verrauschten Signals $\left(\frac{\vartheta Signal}{\vartheta t}\right)$ über dem besagten Variationsgrenzwert ($S_{pic}$) hält, und um zu überprüfen, ob die besagte Spitzen-Anhaltedauer ($d_{pic}$) einen vorbestimmten Mindestdauergrenzwert (do) erreicht oder überschreitet, **dadurch gekennzeichnet, dass** der besagte vorbestimmte Mindestdauergrenzwert (do) als größer oder gleich dem maximalen typischen Halbzyklus des Rauschens ausgewählt wird, welches das verrauschte Signal beeinträchtigt, und streng kleiner als die typische Dauer der zu erfassenden Übergänge (4').

7. Filter nach Anspruch 6, **dadurch gekennzeichnet, dass** der Mindestdauergrenzwert (do) zwischen 30 ms und 40 ms enthalten ist.

**Claims**

1. A power steering management method comprising a step (a) of detecting a transition (4') in a noisy signal, comprising subjecting a noisy signal *(Signal)* which carries an information used for the management of the power steering, to a derivation sub-step (a1) comprising evaluating the time derivative of the noisy signal $\left(\frac{\partial Signal}{\partial t}\right)$, then to a selective filtering sub-step (a2) comprising comparing said time derivative of the noisy signal $\left(\frac{\partial Signal}{\partial t}\right)$ to a predetermined variation threshold ($S_{peak}$) in order to detect the occurrence of a derivative peak (7) greater than said variation threshold ($S_{peak}$), evaluating the duration ($d_{peak}$) for holding said derivative peak, during which the time derivative of the noisy signal $\left(\frac{\partial Signal}{\partial t}\right)$ is held above said variation threshold ($S_{peak}$), and checking whether said peak hold duration ($d_{peak}$) reaches or exceeds a predetermined minimum duration threshold (do), said method being **characterized in that** the minimum duration threshold (do) is chosen to be equal to or greater than the maximum half-period characteristic of the noise affecting the noisy signal *(Signal),* and strictly lower than the duration characteristic of the transitions (4') to be detected.

2. The method according to claim 1, **characterized in that** the noisy signal *(Signal)* is constituted by a signal called « motor torque signal » ($C_{Mot}$, $C_{assist}$) which is representative of the assistance force ($C_{assist}$) delivered by the assist motor (2) of the steering.

3. The method according to any of the preceding claims, **characterized in that** the minimum duration threshold (do) is comprised between 30 ms and 40 ms.

4. The method according to any of the preceding claims, **characterized in that** the transition detection step (a) is followed by a transition characterization step (b) comprising identifying a peak start time ($t_{start}$) which corresponds to the time at which the time derivative of the noisy signal $\left(\frac{\partial Signal}{\partial t}\right)$ passes above the variation threshold ($S_{peak}$), and identifying a peak end time ($t_{end}$) which corresponds to the time at which the time derivative of the noisy signal $\left(\frac{\partial Signal}{\partial t}\right)$ goes down below said variation threshold ($S_{peak}$).

5. The method according to any of the preceding claims, **characterized in that** the variation threshold ($S_{peak}$) and/or the minimum duration threshold (do) for holding a peak is/are adjusted as a function of the angular acceleration ($\ddot{\theta}_{steering\ wheel}$) of the steering wheel.

6. A filter for detecting transitions (4') within a noisy signal, said filter comprising a derivation module (6) which is structured to collect the noisy signal (*Signal*) and evaluate the time derivative $\left(\frac{\partial Signal}{\partial t}\right)$, as well as a selective filtering module (8, 9) which is structured, on the one hand, to compare said time derivative of the noisy signal $\left(\frac{\partial Signal}{\partial t}\right)$ to a predetermined variation threshold ($S_{peak}$) in order to detect the occurrence of a derivative peak (7), greater than said variation threshold ($S_{peak}$) and, on the other hand, to evaluate the duration ($d_{peak}$) for holding said peak, during which the time derivative of the noisy signal $\left(\frac{\partial Signal}{\partial t}\right)$ is held above said variation thresh-

old ($S_{peak}$) after crossing said variation threshold ($S_{peak}$), and to check whether said peak hold duration ($d_{peak}$) reaches or exceeds a predetermined minimum duration threshold (do), **characterized in that** said minimum duration threshold (do) is chosen to be equal to or greater than the maximum half-period characteristic of the noise affecting the noisy signal and strictly less than the duration characteristic of the transitions (4') to be detected.

7. The filter according to claim 6, **characterized in that** the minimum duration threshold (do) is comprised between 30 ms and 40 ms.

**Fig. 1**

**Fig. 2**

**Fig. 3**

**Fig. 4**

**EP 3 114 006 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1645454 A1